Europäisches Patentamt
European Patent Office
Office européen des brevets

(11) Veröffentlichungsnummer: **0 237 764**
**A2**

(12) # EUROPÄISCHE PATENTANMELDUNG

(21) Anmeldenummer: **87101746.3**

(22) Anmeldetag: **09.02.87**

(51) Int. Cl.⁴: **A01N 55/00**, A01N 47/38, A01N 43/84, A01N 43/653, A01N 43/54, A01N 43/50, A01N 43/40, A01N 43/34, //(A01N55/00,33:12),(A01N47/38,33:12),(A01N43/84,33:12),(A01N43/653,33:12),(A01N43/54,33:12),(A01N43/50,33:12),(A01N43/40,33:12),(A01N43/34,33:12)

(30) Priorität: **21.02.86 DE 3605551**

(43) Veröffentlichungstag der Anmeldung: **23.09.87 Patentblatt 87/39**

(84) Benannte Vertragsstaaten: **BE DE FR GB IT NL SE**

(71) Anmelder: **BAYER AG**
**Konzernverwaltung RP Patentabteilung**
**D-5090 Leverkusen 1 Bayerwerk(DE)**

(72) Erfinder: **Reinecke, Paul, Dr.**
**Steinstrasse 8**
**D-5090 Leverkusen 3(DE)**
Erfinder: **v. Stritzky, Werner, Dr.**
**Carnegielaan 1**
**B-6500 Hasselt(BE)**
Erfinder: **Dutzmann, Stefan, Dr.**
**Leinenweberweg 33**
**D-4000 Düsseldorf 13(DE)**

(54) **Fungizide Mittel.**

(57) Wirkstoffkombinationen aus A) quaternären Ammonium-Salzen der Formel

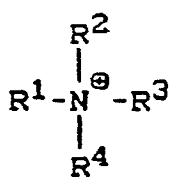

$X^{\ominus}$ (I)

in welcher
$R^1$, $R^2$, $R^3$, $R^4$ und $X^{\ominus}$ die in der Beschreibung angegebene Bedeutung haben,
und
B) Azol-Derivaten der in der Beschreibung angegebenen Formeln (II) bis (IX),
Pyridin-bzw. Pyrimidin-Derivaten der in der Beschreibung angegebenen Formeln (X) und (XI) bzw. Morpholin-oder Piperidin-Derivaten der in der Beschreibung angegebenen Formel (XII)
sind sehr gut zur Bekämpfung von phytopathogenen Pilzen geeignet.

EP 0 237 764 A2

## Fungizide Mittel

Die vorliegende Erfindung betrifft neue Wirkstoffkombinationen, die aus bekannten quaternären Ammonium-Salzen einerseits und aus weiteren bekannten fungiziden Wirkstoffen andererseits bestehen und sehr gut zur Bekämpfung von phytopathogenen Pilzen geeignet sind.

Es ist bereits bekannt geworden, daß bestimmte quaternäre Ammonium-Salze zur Bekämpfung von Schadpilzen bei Pflanzen eingestetzt werden können (vgl. Ann. Appl. Biol. 91, 203-210 und FR-PS 1 578 111). Die Wirkung dieser Stoffe ist jedoch für eine Anwendung in der Praxis nicht ausreichend.

Ferner ist bekannt, daß zahlreiche Azol-Derivate, substituierte Pyrimidine und Pyridine sowie Morpholin-Verbindungen fungizide Eigenschaften besitzen (vgl. Büchel "Pflanzenschutz und Schädlingsbekämpfung", Seiten 149-153, Georg Thieme Verlag, Stuttgart 1977). Die Wirkung dieser Stoffe ist gut. Bei niedrigen Aufwandmengen und bei der Bekämpfung einiger Schadpilze ist die fungizide Potenz aber nicht in allen Fällen befriedigend.

Im übrigen geht aus der DE-OS 2 700 806 hervor, daß Kombinationen aus 1-(4-Chlorphenoxy)-1-imidazol-1-yl-3,3-dimethyl-butan-2-on und Alkyl-dimethylbenzyl-ammoniumchlorid antimikrobielle Eigenschaften aufweisen und im Materialschutz eingesetzt werden können. Eine Verwendung derartiger Wirkstoff-Kombination im Pflanzenschutz wird allerdings nicht offenbart.

Es wurde nun gefunden, daß die neuen Wirkstoffkombinationen aus

A) mindestens einem quaternären Ammonium-Salz der Formel

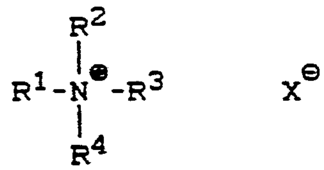

(I)

in welcher

$R^1$, $R^2$, $R^3$ und $R^4$ unabhängig voneinander für Alkyl, Aralkyl oder Aryl stehen und

$X^{\ominus}$ für Halogenid, Sulfat, Alkylsulfonat oder gegebenenfalls substituiertes Arylsulfonat steht,

und

B) mindestens einem Azol-Derivat der Formel

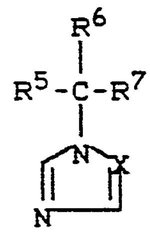

(II)

in welcher

$R^5$ für gegebenenfalls substituiertes Phenyl, gegebenenfalls substituiertes Phenylcarbonyl, Alkyl, Alkenyl, Alkinyl, Cycloalkyl, Alkylcarbonyl, Cyano, eine Estergruppierung oder einen Säureamid-Rest steht,

$R^6$ für gegebenenfalls substituiertes Phenyl, Alkyl oder Cycloalkyl steht,

$R^7$ für gegebenenfalls substituiertes Phenyl steht und

X für Stickstoff oder eine CH-Gruppe steht,

-oder einem Azol-Derivat der Formel

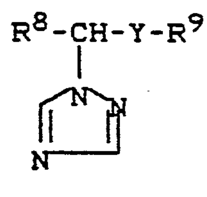

(III)

in welcher

$R^8$ für gegebenenfalls substituiertes Phenoxy, gegebenenfalls substituiertes Phenoxyalkyl, gegebenenfalls substituiertes Benzyl, gegebenenfalls substituiertes Phenyl oder Wasserstoff steht,

$R^9$ für Alkyl oder gegebenenfalls substituiertes Phenyl steht und

Y für eine CO-Gruppe oder die Gruppen der Formeln

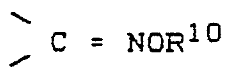 , 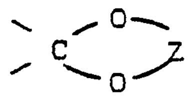 oder 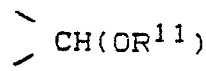

steht, worin

$R^{10}$ für Wasserstoff, Alkyl, gegebenenfalls substituiertes Phenyl oder gegebenenfalls substituiertes Benzyl steht,

Z für eine gegebenenfalls substituierte Alkylen-Kette steht und

$R^{11}$ für Wasserstoff oder Alkyl steht,

-oder einen Azol-Derivat der Formel

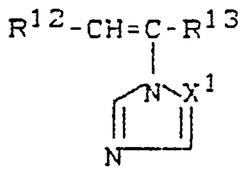

(IV)

in welcher

$R^{12}$ für Alkyl, Cycloalkyl oder gegebenenfalls substituiertes Phenyl steht,

$R^{13}$ für gegebenenfalls substituiertes Alkylcarbonyl, gegebenenfalls substituiertes Phenylcarbonyl oder für eine -CH(OH)-$R^{14}$ Gruppierung steht, worin

$R^{14}$ für Alkyl oder gegebenenfalls substitutiertes Phenyl steht,

und

$X^1$ für Stickstoff oder eine CH-Gruppe steht,

-oder einem Azol-Derivat der Formel

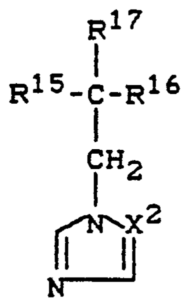

(V)

in welcher

$R^{15}$ für gegebenenfalls substituiertes Phenyl steht,

$R^{16}$ für Alkyl oder gegebenenfalls substituiertes Phenyl steht,

$R^{17}$ für Wasserstoff, Cyano oder Hydroxy steht und

$X^2$ für Stickstoff oder eine CH-Gruppe steht,

-oder einem Azol-Derivat der Formel

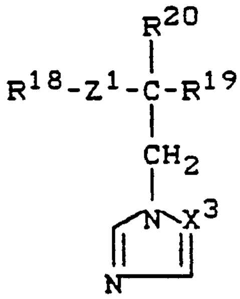

(VI)

in welcher

$R^{18}$ für gegebenenfalls substituiertes Phenyl steht,

$R^{19}$ für Alkyl, Cycloalkyl oder gegebenenfalls substituiertes Phenyl steht,

$R^{20}$ für Hydroxy oder Alkoxy steht,

$Z^1$ für $-CH_2-CH_2-$, $-CH=CH-$, $-C\equiv C-$oder $-O-CH_2-$steht, wobei die $-O-CH_2-$Gruppe so gebunden ist, daß das Sauerstoffatom mit dem Phenylrest verknüpft ist, und

$X^3$ für Stickstoff oder eine CH-Gruppe steht,

-oder einem Azol-Derivat der Formel

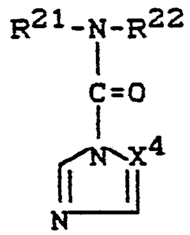

(VII)

in welcher
$R^{21}$ für gegebenenfalls substituiertes Phenoxyalkyl steht,
$R^{22}$ für Alkyl steht und
$X^4$ für Stickstoff oder eine CH-Gruppe steht,
-oder einem Azol-Derivat der Formel

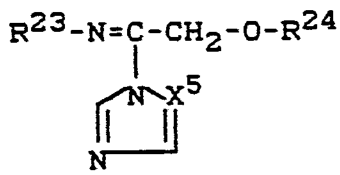

(VIII)

in welcher
$R^{23}$ für Alkyl oder gegebenenfalls substituiertes Phenyl steht,
$R^{24}$ für Alkyl, gegebenenfalls substituiertes Phenyl oder gegebenenfalls substituiertes Benzyl steht und
$X^5$ für Stickstoff oder eine CH-Gruppe steht,
-oder einem Azol-Derivat der Formel

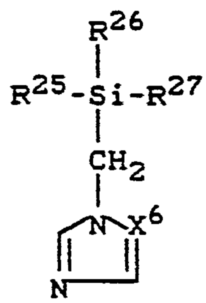

(IX)

in welcher
$R^{25}$ für gegebenenfalls substituiertes Phenyl steht,
$R^{26}$ für gegebenenfalls substituiertes Phenyl steht,
$R^{27}$ für Alkyl steht und
$X^6$ für Stickstoff oder eine CH-Gruppe steht,
-oder einem Pyridin-bzw. Pyrimidin-Derivat der Formel

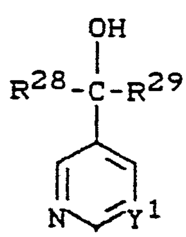

(X)

in welcher
$R^{28}$ für gegebenenfalls substituiertes Phenyl, gegebenenfalls substituiertes Benzyl oder gegebenenfalls substituiertes Phenoxyalkyl steht,
$R^{29}$ für Alkyl, Cycloalkyl oder gegebenenfalls substituertes Phenyl steht und
$Y^1$ für Stickstoff oder eine CH-Gruppe steht,
-oder einem Pyrimidin-Derivat der Formel

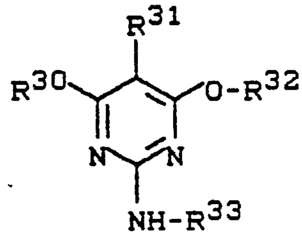

(XI)

in welcher
$R^{30}$ für Alkyl steht,
$R^{31}$ für Alkyl steht,
$R^{32}$ für Wasserstoff oder eine Dialkylsulfonamid-Gruppe steht und
$R^{33}$ für Alkyl steht,
-oder einem Morpholin-oder Piperidin-Derivat der Formel

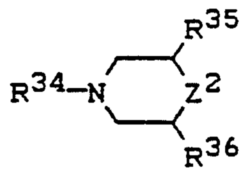

(XII)

in welcher
$R^{34}$ für Alkyl, Cycloalkyl oder gegebenenfalls substiutiertes Phenylalkyl steht,
$R^{35}$ für Wasserstoff oder Alkyl steht,
$R^{36}$ für Wasserstoff oder Alkyl steht und
$Z^2$ für Sauerstoff oder eine $CH_2$-Gruppe steht,
sehr gut zur Bekämpfung von phytopathogenen Pilzen geeignet sind.

Überraschenderweise ist die fungizide Wirkung der erfindungsgemäßen Wirkstoffkombinationen wesentlichen höher als die Summe der Wirkungen der einzelnen Wirkstoff. Es liegt also ein nicht vorhersehbarer echter synergistischer Effekt vor und nicht nur eine Wirkungsergänzung.

Die in den erfindungsgemäßen Wirkstoffkombinationen enthaltenen Wirkstoffe sind durch die Formeln -(I) bis (XII) allgemein definiert.

In der Formel (I) steht $R^1$ vorzugsweise für Alkyl mit 8 bis 30 Kohlenstoffatomen, Aryl mit 6 bis 10 Kohlenstoffatomen oder Aralkyl mit 6 bis 10 Kohlenstoffatomen im Arylteil und 1 bis 4 Kohlenstoffatomen im Alkylteil. $R^2$ steht vorzugsweise für Alkyl mit 1 bis 16 Kohlenstoffatomen, und $R^3$ steht auch vorzugsweise für Alkyl mit 1 bis 16 Kohlenstoffatomen. $R^4$ steht vorzugsweise für Alkyl mit 5 bis 18 Kohlenstoffatomen. $X^{\ominus}$ steht vorzugsweise für Chlorid, Bromid, Iodid, Sulfat, Alkylsulfonat mit 1 bis 4 Kohlenstoffatomen oder für gegebenenfalls durch Alkyl mit 1 bis 4 Kohlenstoffatomen substituiertes Phenylsulfonat.

Besonders bevorzugt sind diejenigen Stoffe der Formel (I), in denen $R^1$ für Benzyl oder Alkyl mit 4 bis 13 Kohlenstoffatomen steht, $R^2$ für Alkyl mit 1 bis 13 Kohlenstoffatomen steht, $R^3$ für Alkyl mit 1 bis 13 Kohlenstoffatomen steht, $R^4$ für Alkyl mit 6 bis 13 Kohlenstoffatomen steht und $X^{\ominus}$ für Chlorid, Bromid, Sulfat, Methylsulfonat oder p-Tolylsulfonat steht.

Als Beispiele für quaternäre Ammonium-Salze der Formel (I) seien die Verbindungen bzw. Substanzgemische der folgenden Formeln genannt.

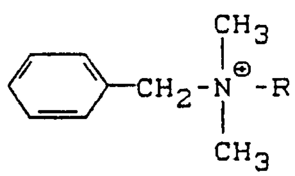

$Cl^{\ominus}$ (I-1)

in welcher
R für Alkyl mit 8 bis 12 Kohlenstoffatomen steht. Bei diesem Alkyl-dimethyl-benzyl-ammoniumchlorid handelt es sich um ein Gemisch von Substanzen mit Alkylketten von 8 bis 12 Kohlenstoffatomen.

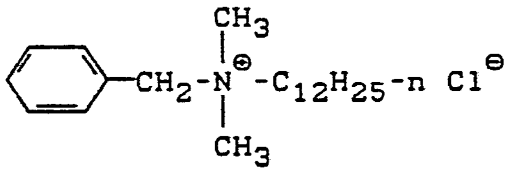

(I-2)

$$(R^{38})_3\overset{\ominus}{N}-CH_3 \qquad Cl^{\ominus} \qquad (I-3)$$

in welcher

$R^{38}$ für Alkyl mit 8 bis 10 Kohlenstoffatomen steht. Bei diesem Salz handelt es sich um ein Gemisch von Substanzen mit Alkylketten von 8 bis 10 Kohlenstoffatomen.

Die quaternären Ammonium-Salze der Formel (I) sind bekannt.

In der Formel (II) stehen vorzugsweise

$R^5$ für gegebenenfalls durch Halogen und/oder Halogenalkyl mit 1 oder 2 Kohlenstoffatomen und 1 bis 5 Halogenatomen substituiertes Phenyl, gegebenenfalls durch Halogen und/oder Halogenalkyl mit 1 oder 2 Kohlenstoffatomen und 1 bis 5 Halogenatomen substituiertes Phenylcarbonyl, Alkyl mit 1 bis 6 Kohlenstoffatomen, Alkenyl mit 2 bis 6 Kohlenstoffatomen, Alkinyl mit 2 bis 6 Kohlenstoffatomen, Cycloalkyl mit 3 bis 8 Kohlenstoffatomen, Alkylcarbonyl mit 1 bis 6 Kohlenstoffatomen im Alkylteil, Cyano, eine -COO-Alkyl-Gruppe mit 1 bis 4 Kohlenstoffatomen im Alkylteil oder für einen Säureamid-Rest der Formel -CO-NH-$R^{37}$, wobei $R^{37}$ für Wasserstoff oder Alkyl mit 1 bis 4 Kohlenstoffatomen steht,

$R^6$ für gegebenenfalls durch Halogen und/oder Halogenalkyl mit 1 oder 2 Kohlenstoffatomen und 1 bis 5 Halogenatomen substituiertes Phenyl, Alkyl mit 1 bis 6 Kohlenstoffatomen oder Cycloalkyl mit 3 bis 8 Kohlenstoffatomen,

$R^7$ für gegebenenfalls durch Halogen und/oder Halogenalkyl mit 1 oder 2 Kohlenstoffatomen und 1 bis 5 Halogenatomen substituiertes Phenyl und

X für Stickstoff oder eine CH-Gruppe.

Besonders bevorzugt sind diejenigen Verbindungen der Formel (II), in denen

$R^5$ für gegebenenfalls durch Fluor, Chlor und/oder Trifluormethyl substituiertes Phenyl, gegebenenfalls durch Fluor, Chlor und/oder Trifluormethyl substituiertes Phenylcarbonyl, Alkyl mit 1 bis 4 Kohlenstoffatomen, Alkenyl mit 3 bis 5 Kohlenstoffatomen, Alkinyl mit 3 bis 5 Kohlenstoffatomen, Cycloalkyl mit 3 bis 7 Kohlenstoffatomen, Alkylcarbonyl mit 1 bis 4 Kohlenstoffatomen im Alkylteil, Cyano, eine -COO-Alkyl-Gruppe mit 1 oder 2 Kohlenstoffatomen im Alkylteil oder für einen Säureamid-Rest der Formel -CO-NH-$R^{37}$ steht, worin $R^{37}$ für Wasserstoff, Methyl oder Ethyl steht,

$R^6$ gegebenenfalls durch Fluor, Chlor und/oder Trifluormethyl substituiertes Phenyl, Alkyl mit 1 bis 4 Kohlenstoffatomen oder Cycloalkyl mit 3 bis 7 Kohlenstoffatomen steht,

$R^7$ für gegebenenfalls durch Fluor, Chlor und/oder Trifluormethyl substituiertes Phenyl steht und

X für Stickstoff oder eine CH-Gruppe steht.

Beispielhaft genannt für Azol-Derivat der Formel (II) sei der Wirkstoff der Formel

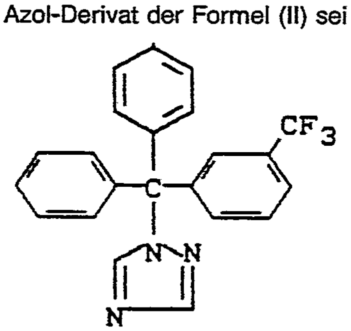

(II-1)

In der Formel (III) stehen vorzugsweise

$R^8$ für gegebenenfalls durch Halogen, Alkyl mit 1 bis 4 Kohlenstoffatomen, Halogenalkyl mit 1 oder 2 Kohlenstoffatomen und 1 bis 5 Halogenatomen, Phenyl und/oder Alkoximinomethyl mit 1 bis 4 Kohlenstoffatomen in der Alkoxygruppe substituiertes Phenoxy, gegebenenfalls durch Halogen, Alkyl mit 1 bis 4 Kohlenstoffatomen, Halogenalkyl mit 1 oder 2 Kohlenstoffatomen und 1 bis 5 Halogenatomen und/oder Phenyl substituiertes Phenoxyalkyl mit 2 bis 6 Kohlenstoffatomen in der Alkylgruppe, gegebenenfalls durch Halogen, Alkyl mit 1 bis 4 Kohlenstoffatomen, Halogenalkyl mit 1 oder 2 Kohlenstoffatomen und 1 bis 5 Halogenatomen und/oder Phenyl substituiertes Benzyl, gegebenenfalls durch Halogen, Alkyl mit 1 bis 4 Kohlenstoffatomen, Halogenalkyl mit 1 oder 2 Kohlenstoffatomen und 1 bis 5 Halogenatomen und/oder Phenyl substituiertes Phenyl oder für Wasserstoff,

$R^9$ für Alkyl mit 1 bis 6 Kohlenstoffatomen oder für gegebenenfalls durch Halogen, Alkyl mit 1 bis 4 Kohlenstoffatomen, Halogenalkyl mit 1 oder 2 Kohlenstoffatomen und 1 bis 5 Halogenatomen und/oder Phenyl substituiertes Phenyl und

Y für eine CO-Gruppe oder die Gruppen der Formeln

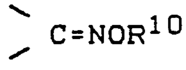 , 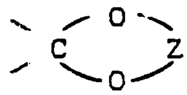 oder 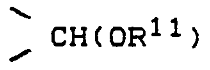 ,

worin

$R^{10}$ für Wasserstoff, Alkyl mit 1 bis 6 Kohlenstoffatomen, gegebenenfalls durch Halogen substituiertes Phenyl oder für gegebenenfalls durch Halogen substituiertes Benzyl steht,

Z für eine gegebenenfalls durch Alkyl mit 1 bis 4 Kohlenstoffatomen substituierte Alkylenkette mit 2 oder 3 Kohlenstoffatomen in der Alkylenkette steht und

$R^{11}$ für Wasserstoff oder Alkyl mit 1 bis 6 Kohlenstoffatomen steht.

Besonders bevorzugt sind diejenigen Verbindungen der Formel (III), in denen

$R^8$ für gegebenenfalls durch Fluor, Chlor, Trifluormethy, Methyl, Phenyl und/oder Methoximinomethyl substituiertes Phenoxy, gegebenenfalls durch Fluor, Chlor, Trifluormethyl, Methyl und/oder Phenyl substituiertes Phenoxyalkyl mit 2 bis 4 Kohlenstoffatomen im Alkylteil, gegebenenfalls durch Fluor, Chlor, Trifluormethyl, Methyl und/oder Phenyl substituiertes Benzyl, gegebenenfalls durch Fluor, Chlor, Trifluormethyl, Methyl und/oder Phenyl substituiertes Phenyl oder für Wasserstoff steht,

$R^9$ für Alkyl mit 1 bis 4 Kohlenstoffatomen oder für gegebenenfalls durch Fluor, Chlor, Methyl, Trifluormethyl und/oder Phenyl substituiertes Phenyl steht und

Y für eine CO-Gruppe oder die Gruppen der Formeln

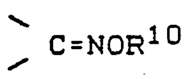 , 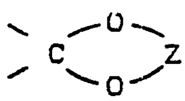 oder 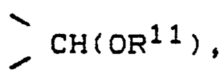 ,

steht, worin

$R^{10}$ für Wasserstoff, Methyl, Ethyl, gegebenenfalls durch Fluor und/oder Chlor substituiertes Phenyl oder für gegebenenfalls durch Fluor und/oder Chlor substituiertes Benzyl steht,

Z für $-CH_2-CH_2-$, $-CH_2-CH_2-CH_2-$,

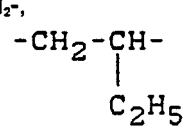 oder 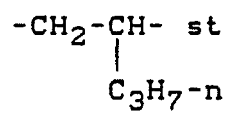 steht

und

$R^{11}$ für Wasserstoff, Methyl oder Ethyl steht.

Als Beispiele für Azol-Derivate der Formel (III) seien die Verbindungen der folgenden Formeln genannt:

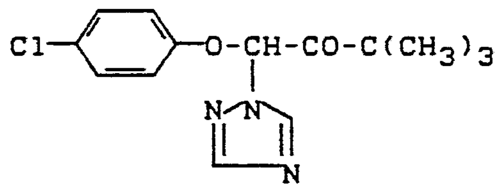

(III-1)

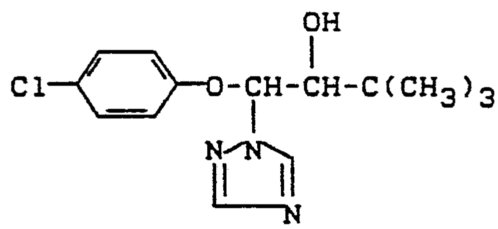

(III-2)

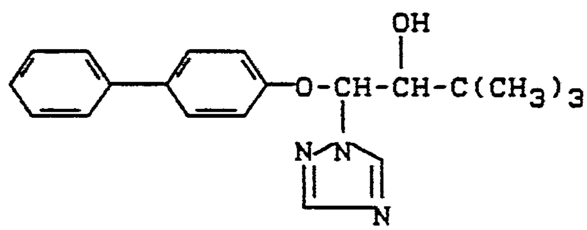

(III-3)

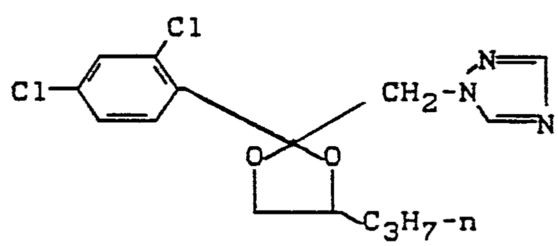

(III-4)

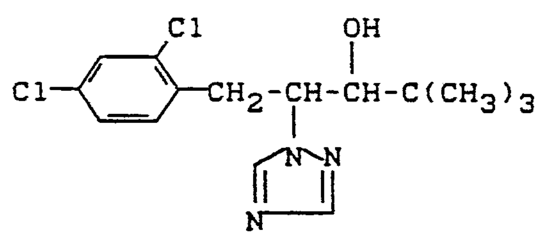

(III-5)

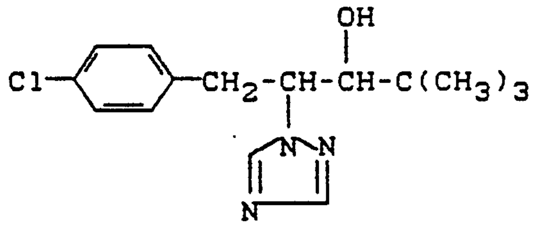

(III-6)

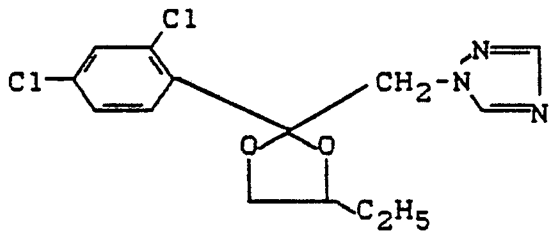

(III-7)

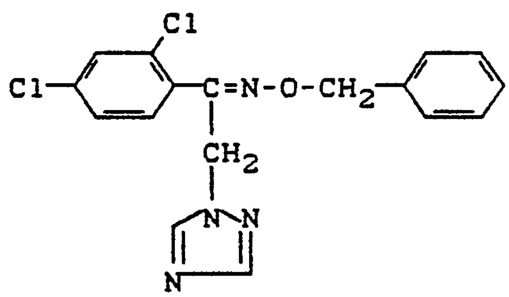

(III-8)

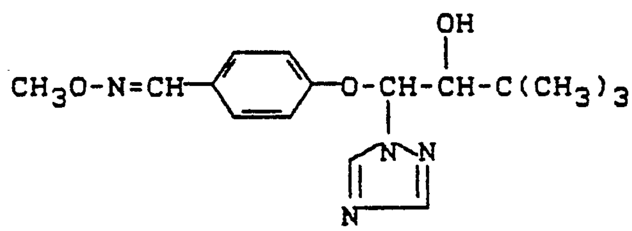

(III-9)

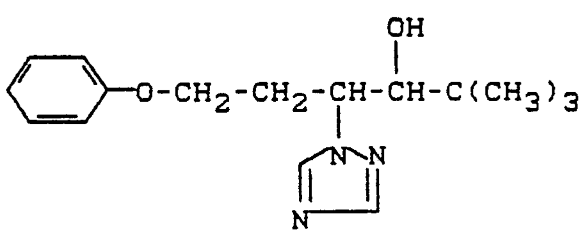

(III-10)

In der Formel (IV) stehen vorzugsweise

$R^{12}$ für Alkyl mit 1 bis 6 Kohlenstoffatomen, Cycloalkyl mit 3 bis 8 Kohlenstoffatomen oder für gegebenenfalls durch Halogen, Halogenalkyl mit 1 oder 2 Kohlenstoffatomen und 1 bis 5 Halogenatomen, Alkyl mit 1 bis 4 Kohlenstoffatomen und/oder Phenyl substituiertes Phenyl,

$R^{13}$ für gegebenenfalls durch Halogen und/oder Phenyl substituiertes Alkylcarbonyl mit 1 bis 6 Kohlenstoffatomen im Alkylteil, gegebenenfalls durch Halogen substituiertes Phenylcarbonyl oder für eine -CH(OH)-$R^{14}$ Gruppe,

in welcher

$R^{14}$ für Alkyl mit 1 bis 6 Kohlenstoffatomen oder für gegebenenfalls durch Halogen substituiertes Phenyl steht,

und

X' für Stickstoff oder ein CH-Gruppe.

Besonders bevorzugt sind diejenigen Verbindungen der Formel (IV), in denen
$R^{12}$ für Alkyl mit 1 bis 4 Kohlenstoffatomen, Cycloalkyl mit 3 bis 7 Kohlenstoffatomen oder für gegebenenfalls durch Fluor, Chlor, Trifluormethyl, Methyl, Ethyl, tert.-Butyl und/oder Phenyl substituiertes Phenyl steht,
$R^{13}$ für gegebenenfalls durch Fluor, Chlor und/oder Phenyl substituiertes Alkylcarbonyl mit 1 bis 4 Kohlenstoffatomen im Alkylteil, gegebenenfalls durch Fluor und/oder Chlor substituiertes Phenylcarbonyl oder für eine -CH(OH)-$R^{14}$ Gruppe steht, worin
$R^{14}$ für Alkyl 1 bis 4 Kohlenstoffatomen oder für gegebenenfalls durch Fluor und/oder Chlor substituiertes Phenyl steht,
und
$X^1$ für Stickstoff oder eine CH-Gruppe steht.

Als Beispiele für Azol-Derivate der Formel (IV) seien die Verbindungen der folgenden Formeln genannt:

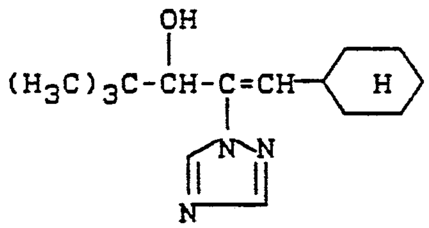

(IV-1)

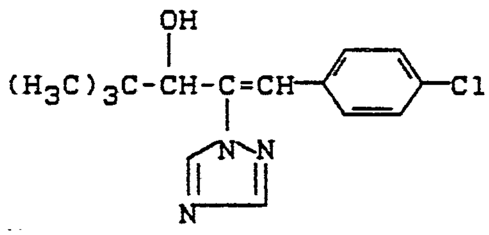

(IV-2)

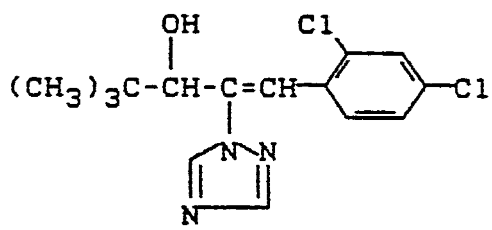

(IV-3)

In der Formel (V) stehen vorzugsweise
$R^{15}$ für gegebenenfalls durch Halogen, Halogenalkyl mit 1 oder 2 Kohlenstoffatomen und 1 bis 5 Halogenatomen und/oder Phenyl substituiertes Phenyl,
$R^{16}$ für Alkyl mit 1 bis 6 Kohlenstoffatomen oder für gegebenenfalls durch Halogen, Halogenalkyl mit 1 oder 2 Kohlenstoffatomen und 1 bis 5 Halogenatomen und/oder Phenyl substituiertes Phenyl
$R^{17}$ für Wasserstoff, Cyano oder Hydroxy und
$X^2$ für Stickstoff oder eine CH-Gruppe.

Besonders bevorzugt sind diejenigen Verbindungen der Formel (V), in denen
$R^{15}$ für gegebenenfalls durch Fluor, Chlor, Trifluormethyl und/oder Phenyl substituiertes Phenyl steht,
$R^{16}$ für Alkyl mit 1 bis 4 Kohlenstoffatomen oder für gegebenenfalls durch Fluor, Chlor, Trifluormethyl und/oder Phenyl substituiertes Phenyl steht,
$R^{17}$ für Wasserstoff, Cyano oder Hydroxy steht und
$X^2$ für Stickstoff oder eine CH-Gruppe steht.

Als Beispiele für Azol-Derivate der Formel (V) seien die Verbindungen der folgenden Formeln genannt:

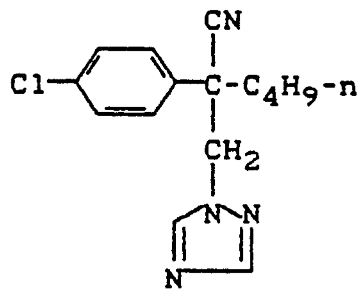

(V-1)

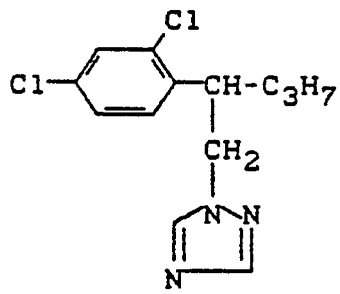

(V-2)

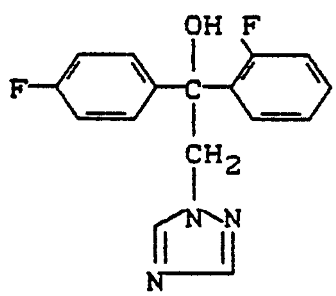

(V-3)

In der Formel (VI) stehen vorzugsweise

$R^{18}$ für gegebenenfalls durch Halogen, Halogenalkyl mit 1 oder 2 Kohlenstofatomen und 1 bis 5 Halogenatomen, Alkoximinomethyl mit 1 bis 4 Kohlenstoffatomen im Alkoxyteil und/oder Phenyl substituiertes Phenyl,

$R^{19}$ für Alkyl mit 1 bis 6 Kohlenstoffatomen, Cycloalkyl mit 3 bis 8 Kohlenstoffatomen oder für gegebenenfalls durch Halogen, Halogenalkyl mit 1 oder 2 Kohlenstoffatomen und 1 bis 5 Halogenatomen und/oder Phenyl substituiertes Phenyl,

$R^{20}$ für Hydroxy oder Alkoxy mit 1 bis 6 Kohlenstoffatomen,

$Z^1$ für $-CH_2-CH_2-$, $-CH=CH-$, $-C{\equiv}C-$oder $-O-CH_2-$, wobei die $-O-CH_2-$Gruppe so gebunden ist, daß das Sauerstoffatom mit dem Phenylrest verknüpft ist, und

$X^3$ für Stickstoff oder eine CH-Gruppe.

Besonders bevorzugt sind diejenigen Verbindungen der Formel (VI), in denen

$R^{18}$ für gegebenenfalls durch Fluor, Chlor, Trifluormethyl, Methoximinomethyl und/oder Phenyl substituiertes Phenyl steht,

$R^{19}$ für Alkyl mit 1 bis 4 Kohlenstoffatomen, Cycloalkyl mit 3 bis 7 Kohlenstoffatomen oder für gegebenenfalls durch Fluor, Chlor, Trifluormethyl und/oder Phenyl substituiertes Phenyl steht,

$R^{20}$ für Hydroxy oder Alkoxy mit 1 bis 4 Kohlenstoffatomen steht,

$Z^1$ für $-CH_2-CH_2-$, $-CH=CH-$, $-C{\equiv}C-$oder $-O-CH_2-$steht, wobei die $-O-CH_2-$Gruppe so gebunden ist, daß das Sauerstoffatom mit dem Phenylrest verknüpft ist, und

$X^3$ für Stickstoff oder eine CH-Gruppe steht.

Als Beispiele für Azol-Derivate der Formel (VI) seien die Verbindungen der folgenden Formeln genannt:

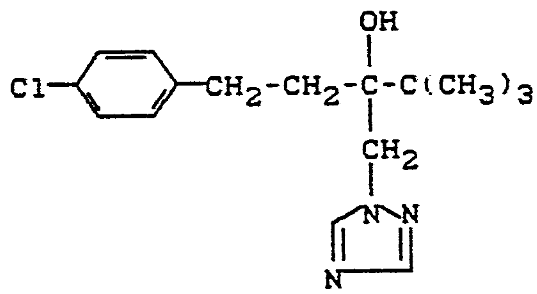

(VI-1)

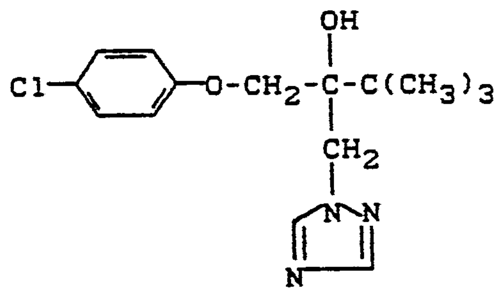

(VI-2)

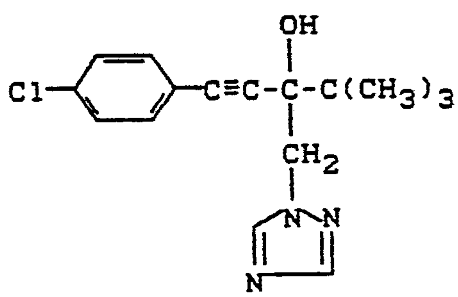

(VI-3)

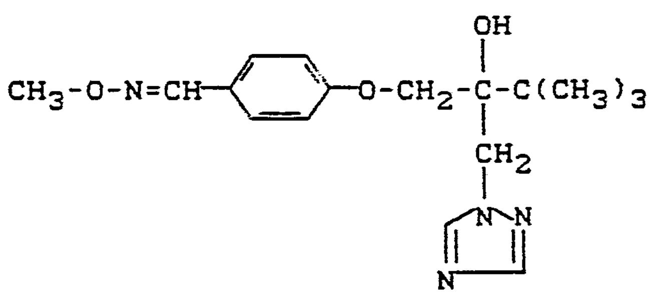

(VI-4)

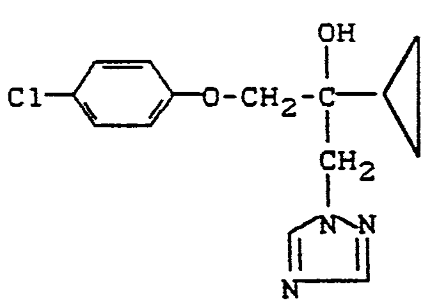

(VI-5)

In der Formel (VII) stehen vorzugsweise

$R^{21}$ für gegebenenfalls durch Halogen, Halogenalkyl mit 1 oder 2 Kohlenstoffatomen und 1 bis 5 Halogenatomen und/oder Phenyl substituiertes Phenoxyalkyl mit 1 bis 4 Kohlenstoffatomen im Alkylteil,

$R^{22}$ für Alkyl mit 1 bis 6 Kohlenstoffatomen und

$X^4$ für Stickstoff oder eine CH-Gruppe.

Besonders bevorzugt sind diejenigen Verbindungen der Formel (VII), in denen
$R^{21}$ für gegebenenfalls durch Fluor, Chlor, Trifluormethyl und/oder Phenyl substituiertes Phenoxyalkyl mit 1 oder 2 Kohlenstoffatomen im Alkylteil steht,
$R^{22}$ für Alkyl mit 1 bis 4 Kohlenstoffatomen steht und
$X^4$ für Stickstoff oder eine CH-Gruppe steht.

Für Azol-Derivate der Formel (VII) sei der Wirkstoff der folgenden Formel beispielhaft genannt.

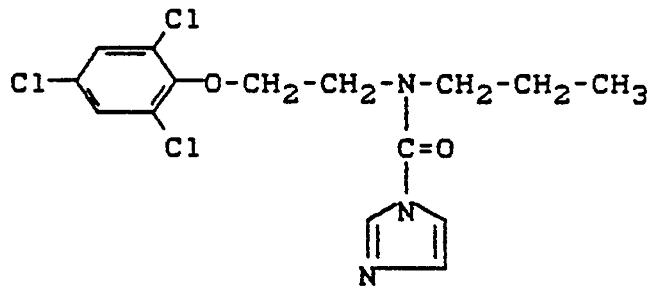

(VII-1)

In der Formel (VIII) stehen vorzugsweise
$R^{23}$ für Alkyl mit 1 bis 6 Kohlenstoffatomen oder für gegebenenfalls durch Halogen und/oder Halogenalkyl mit 1 oder 2 Kohlenstoffatomen und 1 bis 5 Halogenatomen substituiertes Phenyl,
$R^{24}$ für Alkyl mit 1 bis 6 Kohlenstoffatomen, gegebenenfalls durch Halogen und/oder Halogenalkyl mit 1 oder 2 Kohlenstoffatomen und 1 bis 5 Halogenatomen substituiertes Phenyl oder für gegebenenfalls durch Halogen und/oder Halogenalkyl mit 1 oder 2 Kohlenstoffatomen und 1 bis 5 Halogenatomen substituiertes Benzyl und
$X^5$ für Stickstoff oder eine CH-Gruppe.

Besonders bevorzugt sind diejenigen Verbindungen der Formel (VIII), in denen
$R^{23}$ für Alkyl mit 1 bis 4 Kohlenstoffatomen oder für gegebenenfalls durch Fluor, Chlor und/oder Trifluormethyl substituiertes Phenyl steht,
$R^{24}$ für Alkyl mit 1 bis 4 Kohlenstoffatomen, gegebenenfalls durch Fluor, Chlor und/oder Trifluormethyl substituiertes Phenyl oder für gegebenenfalls durch Fluor, Chlor und/oder Trifluormethyl substituiertes Benzyl steht und
$X^5$ für Stickstoff oder eine CH-Gruppe steht.

Für Azol-Derivate der Formel (VIII) sei der Wirkstoff der folgenden Formel beispielhaft genannt:

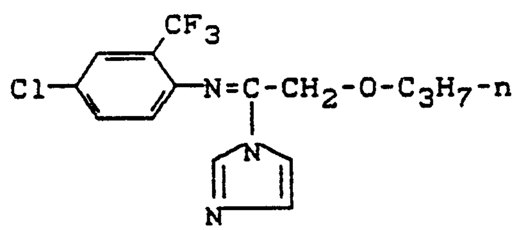

(VIII-1)

In der Formel (IX) stehen vorzugsweise
$R^{25}$ für gegebenenfalls durch Halogen und/oder Halogenalkyl mit 1 oder 2 Kohlenstoffatomen und 1 bis 5 Halogenatomen substituiertes Phenyl,
$R^{26}$ für gegebenenfalls durch Halogen und/oder Halogenalkyl mit 1 oder 2 Kohlenstoffatomen und 1 bis 5 Halogenatomen substituiertes Phenyl,
$R^{27}$ für Alkyl mit 1 bis 4 Kohlenstoffatomen und
$X^6$ für Stickstoff oder eine CH-Gruppe.

Besonders bevorzugt sind diejenigen Verbindungen der Formel (IX), in denen
$R^{25}$ für gegebenenfalls durch Fluor, Chlor und/oder Trifluormethyl substituiertes Phenyl steht,
$R^{26}$ für gegebenenfalls durch Fluor, Chlor und/oder Trifluormethyl substituiertes Phenyl steht,
$R^{27}$ für Methyl oder Ethyl steht und
$X^5$ für Stickstoff oder eine CH-Gruppe steht.

Für Azol-Derivate der Formel (IX) sei der Wirkstoff der folgenden Formel beispielhaft genannt:

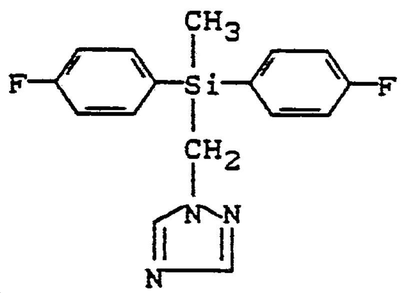

(IX-1)

In der Formel (X) stehen vorzugsweise

$R^{28}$ für gegebenenfalls durch Halogen, Alkyl mit 1 bis 4 Kohlenstoffatomen, Alkoxy mit 1 bis 4 Kohlenstoffatomen und/oder Halogenalkyl mit 1 oder 2 Kohlenstoffatomen und 1 bis 5 Halogenatomen substituiertes Phenyl, gegebenenfalls durch Halogen, Alkyl mit 1 bis 4 Kohlenstoffatomen, Alkoxy mit 1 bis 4 Kohlenstoffatomen und/oder Halogenalkyl mit 1 oder 2 Kohlenstoffatomen und 1 bis 5 Halogenatomen substituiertes Benzyl oder für gegebenenfalls durch Halogen, Alkyl mit 1 bis 4 Kohlenstoffatomen, Alkoxy mit 1 bis 4 Kohlenstoffatomen und/oder Halogenalkyl mit 1 oder 2 Kohlenstoffatomen und 1 bis 5 Halogenatomen substituiertes Phenoxyalkyl mit 1 bis 4 Kohlenstoffatomen im Alkylteil,

$R^{29}$ für Alkyl mit 1 bis 6 Kohlenstoffatomen oder für gegebenenfalls durch Halogen und/oder Halogenalkyl mit 1 oder 2 Kohlenstoffatomen und 1 bis 5 Halogenatomen substituiertes Phenyl und

$Y^1$ für Stickstoff oder eine CH-Gruppe.

Besonders bevorzugt sind diejenigen Verbindungen der Formel (X), in denen

$R^{28}$ für gegebenenfalls durch Fluor, Chlor, Methyl, Methoxy und/oder Trifluormethyl substituiertes Phenyl, gegebenenfalls durch Fluor, Chlor, Methyl, Methoxy und/oder Trifluormethyl substituiertes Benzyl oder für gegebenenfalls durch Fluor, Chlor, Methyl, Methoxy und/oder Trifluormethyl substituiertes Phenoxymethyl steht,

$R^{29}$ für Alkyl mit 1 bis 4 Kohlenstoffatomen, Cycloalkyl mit 3 bis 6 Kohlenstoffatomen oder für gegebenenfalls durch Fluor, Chlor und/oder Trifluormethyl substituiertes Phenyl steht und

$Y^1$ für Stickstoff oder eine CH-Gruppe steht.

Als Beispiele für Pyridin-bzw. Pyrimidin-Derivate der Formel (X) seien die Verbindungen der folgenden Formeln genannt:

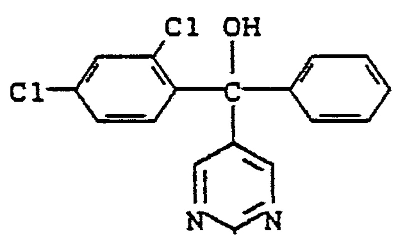

(X-1)

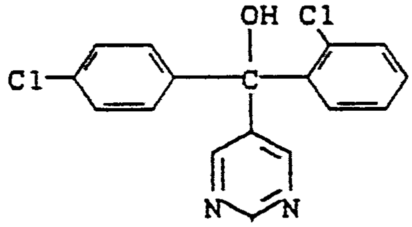

(X-2)

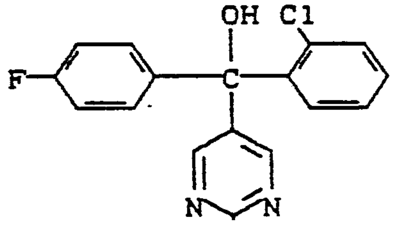

(X-3)

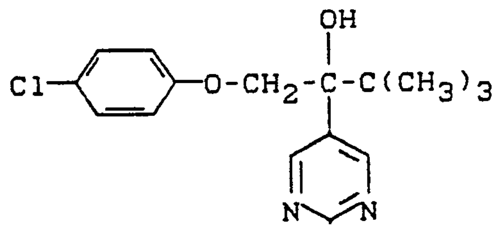

(X-4)

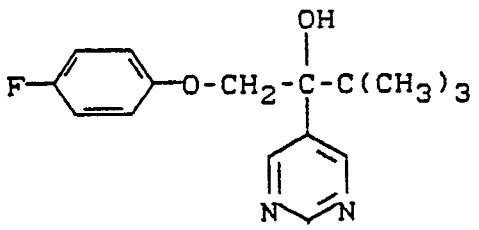

(X-5)

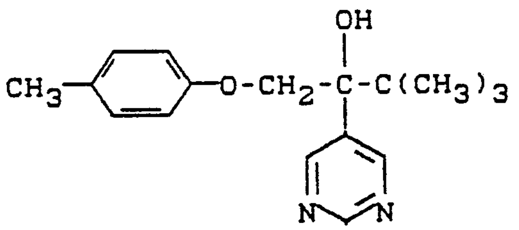

(X-6)

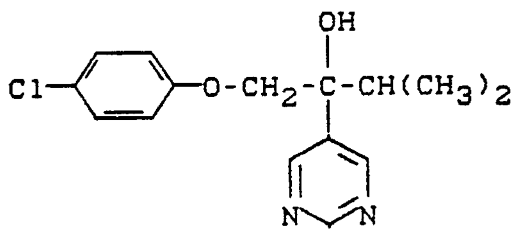

(X-7)

In der Formel (XI) stehen vorzugsweise

$R^{30}$ für Alkyl mit 1 bis 4 Kohlenstoffatomen,

$R^{31}$ für Alkyl mit 1 bis 6 Kohlenstoffatomen,

$R^{32}$ für Wasserstoff oder eine Dialkylsulfonamid-Gruppe mit 1 bis 4 Kohlenstoffatomen in jeder Alkyl-Gruppe und

$R^{33}$ für Alkyl mit 1 bis 4 Kohlenstoffatomen.

Besonders bevorzugt sind diejenigen Verbindungen der Formel (XI), in denen

$R^{30}$ für Methyl oder Ethyl steht,

$R^{31}$ für Alkyl mit 1 bis 4 Kohlenstoffatomen steht,

$R^{32}$ für Wasserstoff oder eine Dialkylsulfonamid-Gruppe mit 1 oder 2 Kohlenstoffatomen in jeder Alkyl-Gruppe steht und

$R^{33}$ für Methyl oder Ethyl steht.

Als Beispiele für Pyrimidin Derivate der Formel (XI) seien die Verbindungen der folgenden Formeln genannt:

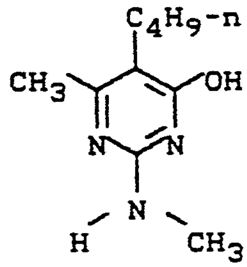

(XI-1)

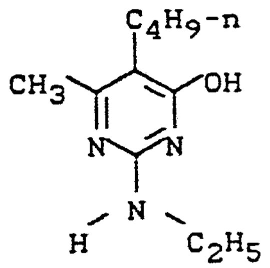

(XI-2)

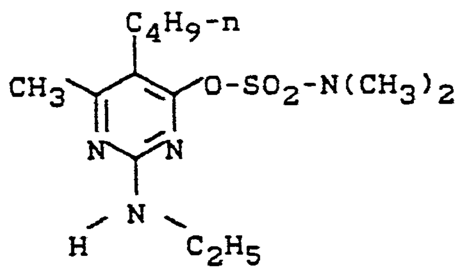

(XI-3)

In der Formel (XII) stehen vorzugsweise

$R^{34}$ für Alkyl mit 1 bis 16 Kohlenstoffatomen, Cycloalkyl mit 5 bis 14 Kohlenstoffatomen oder für gegebenenfalls durch Alkyl mit 1 bis 6 Kohlenstoffatomen und/oder Halogen substituiertes Phenylalkyl mit 1 bis 4 Kohlenstoffatomen in der Alkyl-Gruppe,

$R^{35}$ für Wasserstoff oder Alkyl mit 1 bis 4 Kohlenstoffatomen,

$R^{36}$ für Wasserstoff oder Alkyl mit 1 bis 4 Kohlenstoffatomen und

$Z^2$ für ein Sauerstoffatom oder eine $CH_2$-Gruppe.

Besonders bevorzugt sind diejenigen Verbindungen der Formel (XII), in denen

$R^{34}$ für Alkyl mit 4 bis 14 Kohlenstoffatomen, Cycloalkyl mit 6 bis 12 Kohlenstoffatomen oder für gegebenenfalls durch Alkyl mit 1 bis 4 Kohlenstoffatomen, Fluor und/oder Chlor substituiertes Phenylalkyl mit 1 bis 4 Kohlenstoffatomen in der Alkylgruppe steht,

$R^{35}$ für Wasserstoff, Methyl oder Ethyl steht,

$R^{36}$ für Wasserstoff, Methyl oder Ethyl steht und

$Z^2$ für ein Sauerstoffatom oder eine $CH_2$-Gruppe steht.

Als Beispiele für Morpholin-bzw. Piperidin-Derivate der Formel (XII) seien die Verbindungen der folgenden Formeln genannt:

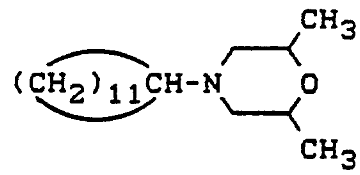

(XII-1)

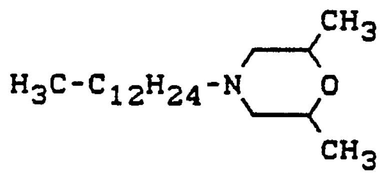

(XII-2)

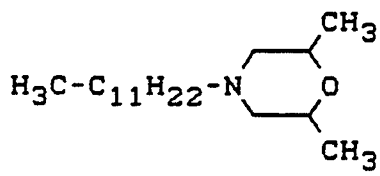

(XII-3)

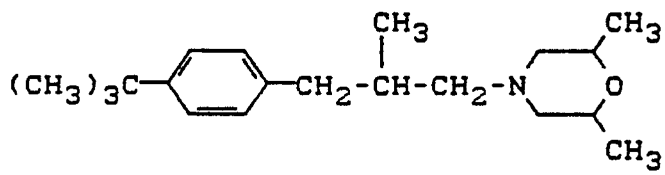

(XII-4)

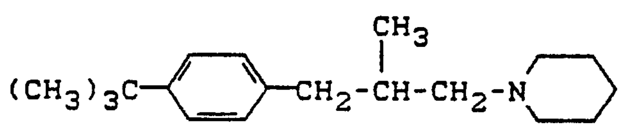

(XII-5)

Die Verbindungen der Formeln (II) bis (XII) sind bekannt. In diesem Zusammenghang sei auf die folgenden Druckschriften verwiesen:

Büchel "Pflanzenschutz und Schädlingsbekämpfung", Seiten 149-153, Georg Thieme Verlag, Stuttgart, 1977;

DE-OS 1 670 976, DE-PS 1 795 249, DE-OS 2 128 700,
DE-OS 2 628 152, DE-OS 2 201 063, DE-PS 2 324 010,
DE-OS 2 654 890, DE-OS 2 734 426, DE-OS 2 737 489,
US-PS 4 166 854, EP-OS 0 015 639, DE-OS 2 906 061,
DE-OS 2 838 847, DE-OS 3 010 560, DE-OS 2645 617,
DE-OS 3 018 866, DE-OS 2 736 122, DE-OS 2 604 047,
EP-OS 0 015 756, EP-OS 0 052 424, EP-OS 0 061 835,
DE-OS 2 742 173 und DE-OS 1 770 288.

Die erfindungsgemäßen Wirkstoffkombinationen enthalten mindestens ein quaternäres Ammonium-Salz der Formel (I) sowie mindestens eine Verbindung aus der Gruppe der Formeln (II) bis (XII). Sie können darüberhinaus auch weitere fungizid wirksame Zumischkomponenten enthalten. Die Azol-Derivate der Formeln (II) bis (IX) und die Morpholin-bzw. Piperidin-Derivate der Formel (XII) können zum Teil auch in Form von Säureadditions-Salzen eingesetzt werden.

Wenn die Wirkstoffe in den erfingungsgemäßen Wirkstoffkombinationen in bestimmten Verhältnissen vorliegen, zeigt sich der synergistische Effekt besonders deutlich. Jedoch können die Gewichtsverhältnisse der Wirkstoffe in den Wirkstoffkombinationen in relativ großen Bereichen schwanken. Im allgemeinen entfallen auf 1 Gewichtsteil an einem unter A) aufgeführten Wirkstoff 0,0002 bis 5 Gewichtsteile, vorzugsweise 0,001 bis 3 Gewichtsteile an einem der unter B) aufgeführten Wirkstoffe.

Die erfindungsgemäßen Wirkstoffkombinationen weisen eine starke mikrobizide Wirkung auf und können zur Bekämpfung von unerwünschten Mirkoorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die erfindungsgemäßen Wirkstoffkombinationen haben ein sehr breites Wirkungsspektrum und können angewandt werden gegen parasitäre Pilze, die oberirdische Pflanzenteile befallen oder die Pflanzen vom Boden her angreifen, sowie samenübertragbare Krankheitserreger. Besondere praktische Bedeutung haben solche Wirkstoffkombinationen als Saatgutbeizmittel gegen phytopathogene Pilze, die mit dem Saatgut übertragen werden oder im Boden vorkommen und von dort die Kulturpflanzen befallen. Dabei handelt es sich um Keimlingskrankheiten, Wurzelfäulen, Stengel-, Halm-, Blatt-, Blüten-, Frucht-und Samenkrankheiten, die insbesondere durch Tilletia-, Urocystis-, Ustilago-, Septoria-, Typhula-, Rhynchosporium-, Helminthosporium-und Fusarium-Arten hervorgerufen werden. Durch die systemische Wirkung des einen Mischungspartners werden die Pflanzen auch oft längere Zeit nach der Beizung noch vor Krankheitserregern geschützt, die verschiedene Teile des Sprosses angreifen können, z.B. Erysiphe graminis und Puccinia-Arten. Die Wirkstoffkombinationen können auch als Bodenbehandlungsmittel gegen phytopathogene Pilze eingesetzt werden und wirken gegen Wurzelfäulen und Tracheomykosen, die z.B. durch Krankheitserreger der Gattung Pythium, Verticillium, Phialophora, Rhizoctonia, Fusarium, Helminthosporium und Thielaviopsis verursacht werden.

Die erfindungsgemäßen Wirkstoffkombinationen zeigen aber auch hervorragende Wirkung bei direkter Applikation auf die oberirdischen Pflanzenteile gegen Krankheitserreger auf verschiedenen Kulturpflanzen, wie echte Mehltaupilze (Erysiphe-, Uncinula-, Sphaerotheca-, Podosphaera-Arten, Leveillula taurica), Rostpilze, Venturia-Arten, Cercospora-Arten, Alternaria-Arten, Botrytis-Arten, Phytophthora-Arten, Peronospora-Arten, Pyricularia oryzae, Helminthosphorium-Arten, Septoria-Arten, Pseudo-cercosporella herpotrichoides, Pellicularia sasakii.

Die Wirkstoffkombinationen können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt-und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen in wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwas serstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier-und/oder - schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummearabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffkombinationen können als solche, in Form ihrer Formulierungen oder den daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

Die gute fungizide Wirkung der erfingungsgemäßen Wirkstoffkombinationen geht aus den nachfolgenden Beispielen hervor, Während die einzelnen Wirkstoffe in der fungiziden Wirkung, Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzelnen applizierten Wirkstoffe.

Die zu erwartende Wirkung für eine gegebene Kombination zweier Wirkstoffe kann (vgl. Colby, S.R., "Calculating synergistic and antagonistic responses of herbicide combinations", Weeds 15, Seiten 20-22, 1967) wie folgt berechnet werden:

Wenn

X den Krankheitsbefall, ausgedrückt in % der unbehandelten Kontrolle, beim Einsatz des Wirkstoffes A in einer Aufwandmenge von p kg/ha bzw. g /kg Saatgut,

Y den Krankheitsbefall, ausgedrückt in % der unbehandelten Kontrolle, beim Einsatz des Wirkstoffes B in einer Aufwandmenge von q kg/ha bzw. g/kg Saatgut und

E den erwarteten Krankheitsbefall, ausgedrückt in % der unbehandelten Kontrolle, beim Einsatz der Wirkstoffe A und B in Aufwandmengen von p und q kg/ha bzw. g/kg Saatgut bedeutet,

dann ist

$$E = \frac{X \cdot Y}{100}$$

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Befall geringer sein als der aus der oben angeführten Formel errechnete Wert für den erwarteten Befall (E).

Die sehr gute Wirkung der erfindungsgemäßen Wirkstoffkombinationen geht aus den folgenden Beispielen hervor.

In den folgenden Beispielen werden die nachstehend genannten Wirkstoffe eingesetzt:

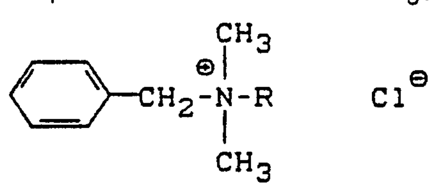

(I-1)

R = Alkyl mit 8 bis 12 Kohlenstoffatomen.

Bei dem Alkyl-dimethyl-benzyl-ammonium-chlorid der Formel (I-1) handelt es sich um ein Gemisch von Substanzen mit Alkylketten von 8 bis 12 Kohlenstoffatomen. Das betreffende Produkt ist unter dem Namen DIMANIN A® im Handel.

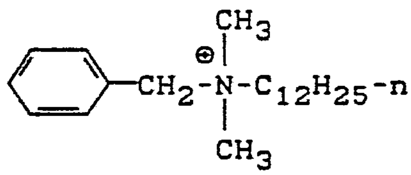 $Cl^{\ominus}$ (I-2)

$(R^{38})_3\overset{\oplus}{N}-CH_3$ $Cl^{\ominus}$ (I-3)

$R^{38}$ = Alkyl mit 8 bis 10 Kohlenstoffatomen.

Bei dem Salz der Formel (I-3) handelt es sich um ein Gemisch von Substanzen mit Alkylketten von 8 bis 10 Kohlenstoffatomen. Das betreffende Produkt ist unter dem Namen ALIQUAT 336® im Handel.

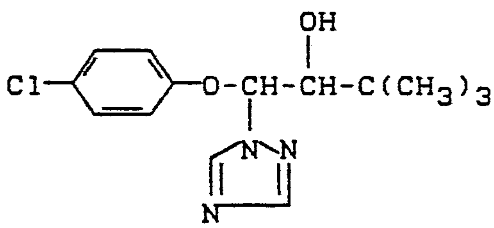 (III-2)

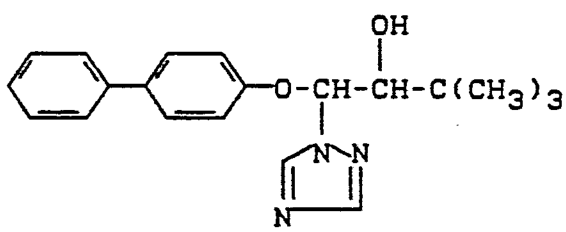 (III-3)

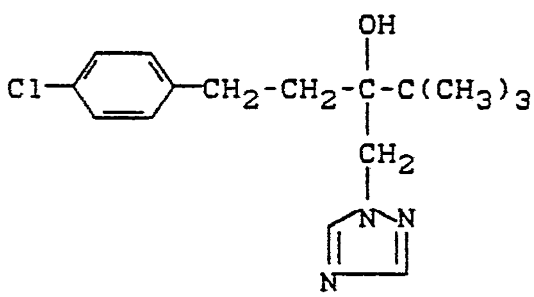 (VI-1)

Beispiel A

Leptosphaeria nodorum-Test (Weizen) / protektiv

Zur Herstellung einer zweckmäßigen Wirkstoffzubereitung werden handelsübliche Wirkstoff-Formulierungen mit Wasser auf die jeweils gewünschte Konzentration verdünnt.

Zur Prüfung auf protektive Wirksamkeit besprüht man junge Pflanzen mit der wirkstoffkombination taufeucht. Nach Antrocknen des Spritzbelages werden die Pflanzen mit einer Konidiensuspension von Leptosphaeria nodorum besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 15°C und einer relativen Luftfeuchtigkeit von ca. 80 % aufgestellt.

10 Tage nach der Inokulation erfolgt die Auswertung.

Wirkstoffe, Wirkstoffkonzentrationen und Versuchsergebnisse gehen aus der folgenden Tabelle hervor.

## Tabelle A

Leptosphaeria nodorum-Test (Weizen) / protektiv

| Wirkstoff | Wirkstoffkonzentration in der Spritzbrühe in Gew.-% | Krankheitsbefall in % der unbehandelten Kontrolle | |
|---|---|---|---|
| (I-1) | 0,0033 | 66,7 | |
| (VI-1) | 0,0025 | 5,0 | |
| | | gefunden | berechnet*) |
| (I-1) + (VI-1) | 0,0033 + 0,0025 | 0,0 | 3,34 |

*) berechnet nach der auf der Seite 43 angegebenen Formel

**Beispiel B**

Puccinia-Test (Weizen) / eradikativ

Zur Herstellung einer zweckmäßigen Wirkstoffzubereitung werden handelsübliche Wirkstoff-Formulierungen mit Wasser auf die jeweils gewünschte Konzentration verdünnt.

Zur Prüfung auf eradiktive Wirksamkeit werden junge Pflanzen mit einer Sporensuspension von Puccinia recondita in einer 0,1 %igen wäßrigen Agarlösung inokuliert. Die Pflanzen verbleiben 24 Stunden bei 20°C und 100 % rel. Luftfeuchtigkeit in einer Inkubationskabine. 6 Tage nach der Inokulation besprüht man die Pflanzen mit der Wirkstoffzubereitung taufeucht.

Die Pflanzen werden in einem Gewächshaus bei einer Temperatur von ca. 20°C und einer relativen Luftfeuchtigkeit von ca. 80 % aufgestellt, um die Entwicklung von Rostpusteln zu begünstigen.

Die Auswertung erfolgt 10 Tage nach der Inokulation.

Wirkstoffe, Wirkstoffkonzentrationen und Versuchsergebnisse gehen aus der folgenden Tabelle hervor.

## T a b e l l e B

Puccinia-Test (Weizen) / eradikativ

| Wirkstoff | Wirkstoffkonzentration in der Spritzbrühe in Gew.-% | Krankheitsbefall in % der unbehandelten Kontrolle | |
|---|---|---|---|
| (I-1) | 0,033 | 100 | |
| (VI-1) | 0,00025 | 87,5 | |
| | | gefunden | berechnet*) |
| (I-1) + (VI-1) | 0,033 + 0,00025 | 41,2 | 87,5 |

*) berechnet nach der auf der Seite 43 angegebenen Formel

Beispiel C

Erysiphe-Test (Getreide) / Sproßbehandlung

Feldversuch

Getreideart: Winter-Gerste
Parzellengröße: 0,5 $m^2$
Anzahl der Wiederholungen: 2

Zur Herstellung einer zweckmäßigen Wirkstoffzubereitung werden handelsübliche Wirkstoff-Formulierungen mit Wasser auf die jeweils gewünschte Konzentration verdünnt.

In den Entwicklungsstadien EC 13 und EC 25 werden die Pflanzen mit den Wirkstoffzubereitungen besprüht, wobei die jeweils gewünschten Wirkstoffmengen ausgebracht werden.

Die Auswertung erfolgt im Entwicklungsstadium EC 29.

Wirkstoffe, Wirkstoffkonzentrationen und Versuchsergebnisse gehen aus der folgenden Tabelle hervor.

## Tabelle C

Erysiphe-Test (Getreide) / Sproßbehandlung

| Wirkstoff | Wirkstoffaufwandmenge in g/ha | Krankheitsbefall in % der unbehandelten Kontrolle | |
|---|---|---|---|
| (I-1) | 330 | 35,0 | |
| (III-2) | 125 | 10,0 | |
| | | gefunden | berechnet*) |
| (I-1) + (III-2) | 330 + 125 | 1,0 | 3,5 |

*) berechnet nach der auf der Seite 43 angegebenen Formel

Beispiel D

Erysiphe-Test (Gerste) / kurativ

Zur Herstellung einer zweckmäßigen Wirkstoffzubereitung werden handelsübliche Wirkstoff-Formulierungen mit Wasser auf die jeweils gewünschte Konzentration verdünnt.

Zur Prüfung auf kurative Wirksamkeit werden junge Pflanzen mit Sporen von Erysiphe graminis f.sp. hordei bestäubt. 48 Stunden nach der Inokulation werden die Pflanzen mit der Wirkstoffzubereitung taufeucht besprüht.

Die Pflanzen werden in einem Gewächshaus bei einer Temperatur von ca. 20°C und einer relativen Luftfeuchtigkeit von ca. 80 % aufgestellt, um die Entwicklung von Mehltaupusteln zu begünstigen.

7 Tage nach der Inokulation erfolgt die Auswertung.

Wirkstoffe, Wirkstoffkonzentrationen und Versuchsergebnisse gehen aus den folgenden Tabellen hervor.

## T a b e l l e D-1

Erysiphe-Test (Gerste) / kurativ

| Wirkstoff | Wirkstoffkonzentration in der Spritzbrühe in Gew.-% | Krankheitsbefall in % der unbehandelten Kontrolle | |
|---|---|---|---|
| (I-1) | 0,006 | 100 | |
| (III-2) | 0,002 | 66,7 | |
| | | gefunden | berechnet*) |
| (I-1) + (III-2) | 0,006<br>0,002 | 7,5 | 66,7 |

*) berechnet nach der auf der Seite 43 angegebenen Formel

## Tabelle D-2

Erysiphe-Test (Gerste) / kurativ

| Wirkstoff | Wirkstoffkonzentration in der Spritzbrühe in Gew.-% | Krankheitsbefall in % der unbehandelten Kontrolle | |
|---|---|---|---|
| (I-2) | 0,0075 | 83,6 | |
| (I-3) | 0,015 | 83,6 | |
| (III-2) | 0,005 | 43,6 | |
| | | gefunden | berechnet*) |
| (I-2) + (III-2) | 0,0075 + 0,005 | 3,3 | 36,4 |
| (I-3) + (III-2) | 0,015 + 0,005 | 3,3 | 36,4 |

*) berechnet nach der auf der Seite 43 angegebenen Formel

### Beispiel E

Venturia-Test (Apfel) / protektiv

Zur Herstellung einer zweckmäßigen Wirkstoffzubereitung werden handelsübliche Wirkstoff-Formulierungen mit Wasser auf die jeweils gewünschte Konzentration verdünnt.

Zur Prüfung auf protektive Wirksamkeit bespritzt man junge Pflanzen mit der jeweiligen Wirkstoffzubereitung bis zur Tropfnässe. Nach Antrocknen des Spritzbelages werden die Pflanzen mit einer wäßrigen Konidiensuspension des Apfelschorferregers (Venturia inaequalis) inokuliert und verbleiben dann 1 Tag bei 20°C und 100 % relativer Luftfeuchtigkeit in einer Inkubationskabine.

Die Pflanzen werden dann im Gewächshaus bei 20°C und einer relativen Luftfeuchtigkeit von ca. 70 % aufgestellt.

12 Tage nach der Inokulation erfolgt die Auswertung.

Wirkstoffe, Wirkstoffkonzentrationen und Versuchsergebnisse gehen aus der folgenden Tabelle hervor.

## Tabelle E

Venturia-Test (Apfel) / protektiv

| Wirkstoff | Wirkstoffkonzentration in ppm | Befall in % der Kontrolle | |
|---|---|---|---|
| - (Kontrolle) | - | = 100 | |
| (I-1) | 0,33 | 88 | |
| (III-3) | 0,125 | 63 | |
| | | gefunden | berechnet*) |
| (I-1) + (III-3) | 0,33 + 0,125 | 36 | 55 |

*) berechnet nach der auf der Seite 43 angegebenen Formel

**Ansprüche**

1. Mittel zur Bekämpfung von Schadpilzen bei Pflanzen, gekennzeichnet durch einen Gehalt an einer Wirkstoffkombination bestehend aus

A) mindestens einem quaternären Ammonium-Salz der Formel

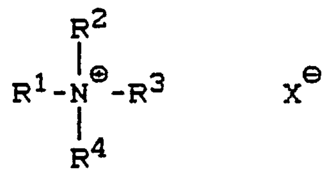 (I)

in welcher
$R^1$, $R^2$, $R^3$ und $R^4$ unabhängig voneinander für Alkyl, Aralkyl oder Aryl stehen und
$X^{\ominus}$ für Halogenid, Sulfat, Alkylsulfonat oder gegebenenfalls substituiertes Arylsulfonat steht,
und
B) mindestens einem Azol-Derivat der Formel

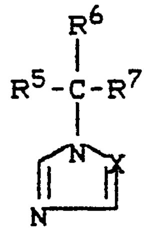 (II)

in welcher
$R^5$ für gegebenenfalls substituiertes Phenyl, gegebenenfalls substituiertes Phenylcarbonyl, Alkyl, Alkenyl, Alkinyl, Cycloalkyl, Alkylcarbonyl, Cyano, eine Estergruppierung oder einen Säureamid-Rest steht,
$R^6$ für gegebenenfalls substituiertes Phenyl, Alkyl oder Cycloalkyl steht,
$R^7$ für gegebenenfalls substituiertes Phenyl steht und
X für Stickstoff oder eine CH-Gruppe steht,
-oder einem Azol-Derivat der Formel

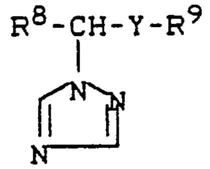 (III)

in welcher
$R^8$ für gegebenenfalls substituiertes Phenoxy, gegebenenfalls substituiertes Phenoxyalkyl, gegebenenfalls substituiertes Benzyl, gegebenenfalls substituiertes Phenyl oder Wasserstoff steht,
$R^9$ für Alkyl oder gegebenenfalls substituiertes Phenyl steht und
Y für eine CO-Gruppe oder die Gruppen der Formeln

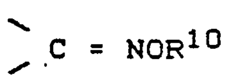 , 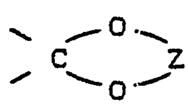 oder 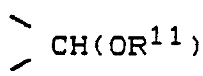

steht, worin
$R^{10}$ für Wasserstoff, Alkyl, gegebenenfalls substituiertes Phenyl oder gegebenenfalls substituiertes Benzyl steht,
Z für eine gegebenenfalls substituierte Alkylen-Kette steht und
$R^{11}$ für Wasserstoff oder Alkyl steht,
-oder einen Azol-Derivat der Formel

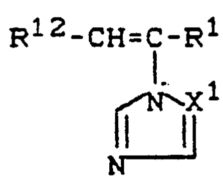 (IV)

in welcher
$R^{12}$ für Alkyl, Cycloalkyl oder gegebenenfalls substituiertes Phenyl steht,
$R^{13}$ für gegebenenfalls substituiertes Alkylcarbonyl, gegebenenfalls substituiertes Phenylcarbonyl oder für eine -CH(OH)-$R^{14}$ Gruppierung steht, worin
$R^{14}$ für Alkyl oder gegebenenfalls substitutiertes Phenyl steht,
und
$X^1$ für Stickstoff oder eine CH-Gruppe steht,

-oder einem Azol-Derivat der Formel

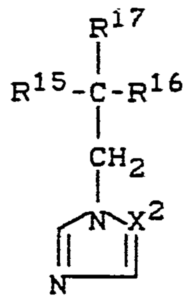

(V)

in welcher
$R^{15}$ für gegebenenfalls substituiertes Phenyl steht,
$R^{16}$ für Alkyl oder gegebenenfalls substituiertes Phenyl steht,
$R^{17}$ für Wasserstoff, Cyano oder Hydroxy steht und
$X^2$ für Stickstoff oder eine CH-Gruppe steht,
-oder einem Azol-Derivat der Formel

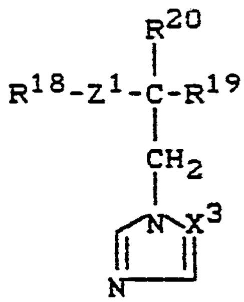

(VI)

in welcher
$R^{18}$ für gegebenenfalls substituiertes Phenyl steht,
$R^{19}$ für Alkyl, Cycloalkyl oder gegebenenfalls substituiertes Phenyl steht,
$R^{20}$ für Hydroxy oder Alkoxy steht,
$Z^1$ für $-CH_2-CH_2-$, $-CH=CH-$, $-C\equiv C-$oder $-O-CH_2-$steht, wobei die $-O-CH_2-$Gruppe so gebunden ist, daß das Sauerstoffatom mit dem Phenylrest verknüpft ist, und
$X^3$ für Stickstoff oder eine CH-Gruppe steht,
-oder einem Azol-Derivat der Formel

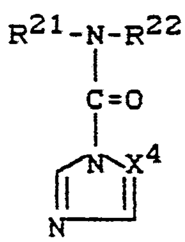

(VII)

in welcher
$R^{21}$ für gegebenenfalls substituiertes Phenoxyalkyl steht,
$R^{22}$ für Alkyl steht und
$X^4$ für Stickstoff oder eine CH-Gruppe steht,
-oder einem Azol-Derivat der Formel

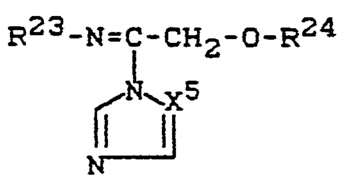

(VIII)

in welcher

$R^{23}$ für Alkyl oder gegebenenfalls substituiertes Phenyl steht,
$R^{24}$ für Alkyl, gegebenenfalls substituiertes Phenyl oder gegebenenfalls substituiertes Benzyl steht und
$X^5$ für Stickstoff oder eine CH-Gruppe steht,
-oder einem Azol-Derivat der Formel

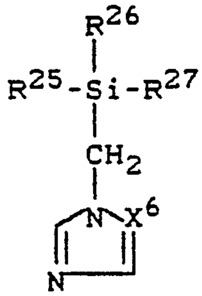

(IX)

in welcher
$R^{25}$ für gegebenenfalls substituiertes Phenyl steht,
$R^{26}$ für gegebenenfalls substituiertes Phenyl steht,
$R^{27}$ für Alkyl steht und
$X^6$ für Stickstoff oder eine CH-Gruppe steht,
-oder einem Pyridin-bzw. Pyrimidin-Derivat der Formel

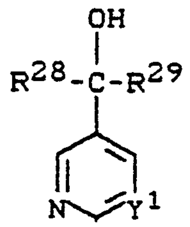

(X)

in welcher
$R^{28}$ für gegebenenfalls substituiertes Phenyl, gegebenenfalls substituiertes Benzyl oder gegebenenfalls substituiertes Phenoxyalkyl steht,
$R^{29}$ für Alkyl, Cycloalkyl oder gegebenenfalls substituertes Phenyl steht und
$Y^1$ für Stickstoff oder eine CH-Gruppe steht,
-oder einem Pyrimidin-Derivat der Formel

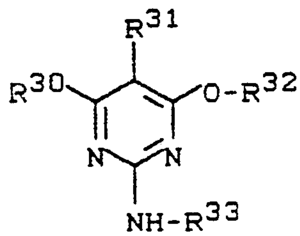

(XI)

in welcher
$R^{30}$ für Alkyl steht,
$R^{31}$ für Alkyl steht,
$R^{32}$ für Wasserstoff oder eine Dialkylsulfonamid-Gruppe steht und
$R^{33}$ für Alkyl steht,
-oder einem Morpholin-oder Piperidin-Derivat der Formel

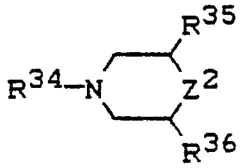

(XII)

in welcher
$R^{34}$ für Alkyl, Cycloalkyl oder gegebenenfalls substituiertes Phenlyalkyl steht,
$R^{35}$ für Wasserstoff oder Alkyl steht
$R^{36}$ für Wasserstoff oder Alkyl steht und

$Z^2$ für Sauerstoff oder eine $CH_2$-Gruppe steht.

2. Mittel gemäß Anspruch 1, dadurch gekennzeichnet, daß in den Wirkstoffkombinationen das Gewichtsverhältnis von einem unter (A) aufgeführten Wirkstoff zu einem unter (B) aufgeführten Wirkstoff zwischen 1:0,0002 und 1:5 liegt.

3. Verfahren zur Bekämpfung von phytopathogenen Pilzen, dadurch gekennzeichnet, daß man Wirkstoffkombinationen gemäß Anspruch 1 auf die Pilze und/oder deren Lebensraum einwirken läßt.

4. Verwendung von Wirkstoffkombinationen gemäß Anspruch 1 zur Bekämpfung von phytopathogenen Pilzen.

5. Verfahren zur Herstellung von Mitteln zur Bekämpfung von phytopathogenen Pilzen, dadurch gekennzeichnet, daß man Wirkstoffkombinationen gemäß Anspruch 1 mit Streckmitteln und/oder oberflächenaktiven Stoffen vermischt.

6. Mittel gemäß Anspruch 1, gekennzeichnet durch einen Gehalt an einer Wirkstoffkombination aus

A) einem quaternären Ammonium-Salz der Formel

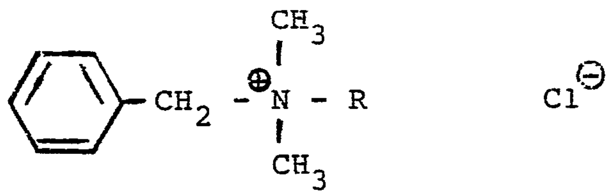

(I-1)

in welcher

R für Alkyl mit 8 bis 12 Kohlenstoffatomen steht, und

B) einem Azol-Derivat der Formel

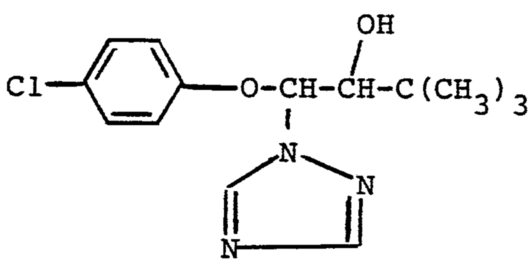

(III-2) .

7. Mittel gemäß Anspruch 1, gekennzeichnet durch einen Gehalt an einer Wirkstoffkombination aus

A) einem quaternären Ammonium-Salz der Formel

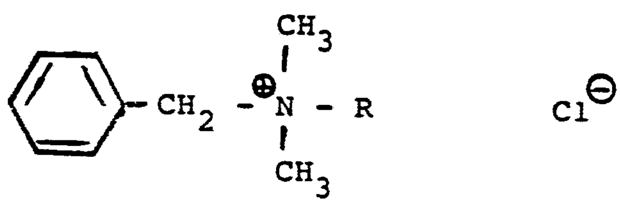

(I-1)

in welcher

R für Alkyl mit 8 bis 12 Kohlenstoffatomen steht, und

B) einem Azol-Derivat der Formel

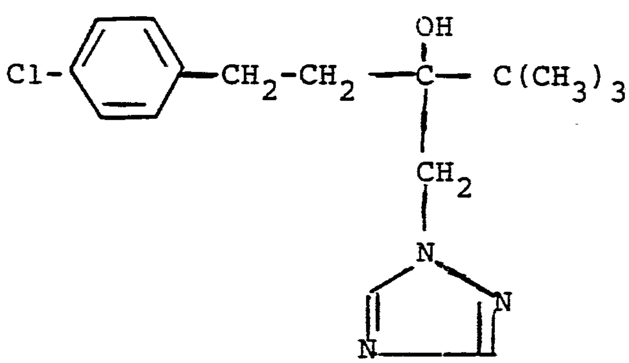

(VI-1) .

8. Mittel gemäß Anspruch 1, gekennzeichnet durch einen Gehalt an einer Wirkstoffkombination aus A) einem quaternären Ammonium-Salz der Formel

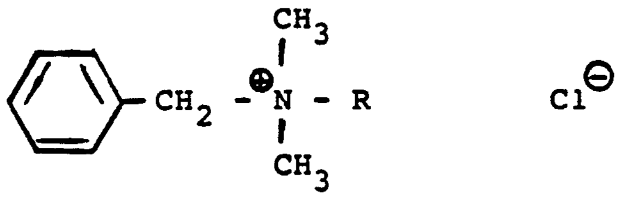

(I-1)

in welcher
R für Alkyl mit 8 bis 12 Kohlenstoffatomen steht, und
B) einem Azol-Derivat der Formel

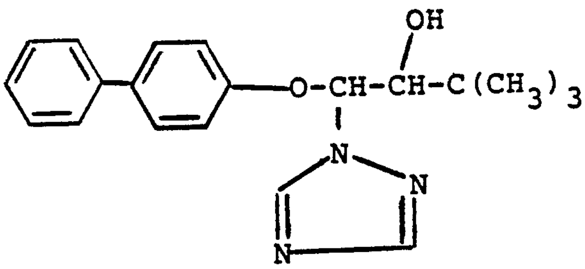

(III-3) .